# EUROPEAN PATENT APPLICATION

(11) **EP 3 124 180 A1**
(43) Date of publication of application: **01.02.2017**
(21) Application number: 15179012.8
(22) Date of filing: 30.07.2015
(51) Int. Cl.: B25B 27/06

(54) **TOOL AND METHOD FOR EXTRACTING A SENSOR UNIT FROM A BEARING RING**

(71) Applicant: Aktiebolaget SKF, 415 50 Göteborg (SE)
(72) Inventor: Taillepied, Alexandre, 37700 Saint Pierre des Corps (FR)
(74) Representative: Tweedlie, Diane Harkness

(57) **Abstract**

The invention proposes a tool (32) and a method for extracting a sensor body (10) clipped to a first ring (12) of a bearing, wherein the sensor body (10) includes engaging portions (36) provided on a first radial edge (18) thereof, and a second radial edge (20) opposite to the first radial edge(18), the sensor body (10) being configured to be mounted such hat a circular gap (24) is formed between the second radial edge (20) and a component configured to be in relation with the first ring (12). The tool (32) includes a plurality of hooks (36) configured to be inserted into said gap (24) and to reach under said second radial edge (20).

## Description

### Field of the Invention

The invention relates to a tool and a method for extracting a sensor unit from a bearing ring.

### Background of the Invention

Sensor units for sensing the angular position of a rotatable element often include induction sensors, for example known from US-B-5,309,094, involving an encoder element, adapted to generate magnetic field variations, and a sensing element adapted to determine, on the basis of the magnetic field variations, the angular position of the rotating element. The encoder element is generally a magnetic ring formed by several magnets having inverted polarities along the circumference of the ring. The sensing element is generally a transducer, which senses the intensity of a magnetic field in its vicinity. When the sensor unit is used nearby an electric motor, the magnetic interactions which exist in the electric motor can produce an interfering magnetic field which is sensed by the sensing element. This provokes sensing errors because the magnetic field variations generated by the encoder element are not accurately enough sensed by the sensing element.

The document EP 2 682 621 B1 discloses an instrumented bearing having a sensor unit arranged in a metallic shielding casing. The sensor unit is provided with snap portions configured to engage with a recess in an outer ring of the bearing so as to clip the sensor unit onto the outer ring.

When a failure appears on a sensor unit such as a motor encoder unit while the unit is mounted in an electric motor, the rotor of the motor must be dismounted in order to exchange the sensor unit. This involves high maintenance cost, collateral quality issues and long unavailability of the system.

### Summary of the Invention

The invention seeks to facilitate a dismounting of a failed sensor body clipped to a bearing mounted on a shaft.

The invention proposes a tool for extracting a sensor body clipped to a first ring of a bearing, wherein the sensor body includes engaging portions provided on a first radial edge thereof, and a second radial edge opposite to the first radial edge, the sensor body being configured to be mounted such that a circular gap is formed between the second radial edge and a component configured to be in relation with the first ring. The tool includes a plurality of hooks configured to be inserted into said gap and to reach under said second radial edge.

By using the extractor tool according to the invention, the failed sensor body can be changed quickly and easily while a dismounting of the rotor can be avoided.

In a preferred embodiment of the invention, the engaging portions on a first radial edge of the sensor body consist in a plurality of clips.

In a preferred embodiment, the hooks are configured to be deflected in a radial direction away from the second radial edge while being inserted and to snap under said second radial edge upon reaching a predetermined axial position.

Preferably, the predetermined axial position is set such that it is reached before or at the axial position where a stop portion of a tool body of the tool comes into axial stop against the first ring.

It is further proposed that the hooks are provided with inclined axial end surfaces configured to radially deflect the hooks when the axial end surfaces come in contact with the sensor body upon inserting the tool into the gap. Alternatively, the second radial edge may be tapered or rounded.

In a simple and cost-saving embodiment the hooks are made of flexible material such as plastics.

In order to enhance the robustness and longevity, the inventors further propose that the end portions of the hooks configured to reach under the edge are provided with reinforcing metal inserts.

Alternatively, the hooks may be pivotably mounted on the tool body and loaded with a spring in a radial direction toward the second radial edge.

According to a yet further aspect of the invention, the tool body comprises a stop portion configured to come into axial stop against the first ring of the bearing, and a centering portion that is configured to center the tool body relative to the component configured to rotate in relation to the first ring. Thanks to the stop portion and the centering portion, the tool can be used not only for extracting the sensor body but further for attaching a new sensor body in a precisely defined axial position defined by the axial stop and in a centered way.

It is further proposed that the tool comprises means for manually releasing said hooks from the second radial edge. The means may be formed as buttons for pushing the hooks radially inward or as a ring cooperating with inclined surfaces of the hooks such that an axial movement of the ring deflects the hooks simultaneously in the desired radial direction.

In the preferred embodiment of the invention, the component configured to rotate in relation to the first ring is a shaft and the first ring is an outer ring of the bearing. As opposed to the alternative case where the sensor unit is clipped onto the inner ring, the extraction is much more difficult in a case where the sensor unit is attached to the outer ring because of the typically narrow gap of 1 -5 mm between the sensor unit and the shaft.

Further, an inner ring of the bearing is preferably mounted on said shaft.

It is further proposed to provide the tool an attachment portion on an axial side opposite to side of the hooks, wherein the attachment portion is configured to be attached to a bearing extractor. A bearing extractor can therefore be fitted with the tool and provided with the additional function of extracting the sensor unit.

The extractor combines the functions of serving as a means for extraction, axial guiding of the extraction movement, providing anchorage means, in particular hooks, for the sensor body and an axial stop and support with the bearing.

The tool body may be formed in one, two or multiple parts.

A further aspect of the invention relates to a method for extracting a sensor body clipped to a first ring of a bearing, wherein the sensor body includes a plurality of clips provided on a first radial edge thereof, and a second radial edge opposite to the first radial edge, the sensor body being configured to be mounted such hat a circular gap is formed between the second radial edge and a component configured to rotate in relation to the first ring.

According to the invention, the method includes using a tool according to one of the preceding claims, wherein the hooks are inserted into said gap until the hooks engage with the second radial edge, and extracting said sensor body by pulling the tool in a direction opposite to the insertion direction.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

### Brief Description of the Figures

- Fig. 1: illustrates a sensor body clipped to a first ring of a bearing;
- Fig. 2: is a perspective view of a tool according to the invention;
- Fig. 3: is a sectional view of the tool according to Fig. 1;
- Fig. 4: illustrates a configuration where the tool is inserted halfway into a gap;
- Fig. 5: illustrates a configuration where the tool is fully inserted into the gap;
- Fig. 6: is a second embodiment of the invention where the hooks are made of flexible material and formed as one piece with the tool body;
- Fig. 7: illustrates a third embodiment of the invention wherein end portions of the hooks configured to reach under the edge are provided with reinforcing metal inserts; and
- Fig. 8a and 8c: illustrate a method for clipping a new sensor body using a tool according to the invention.

### Detailed Description of the Embodiments

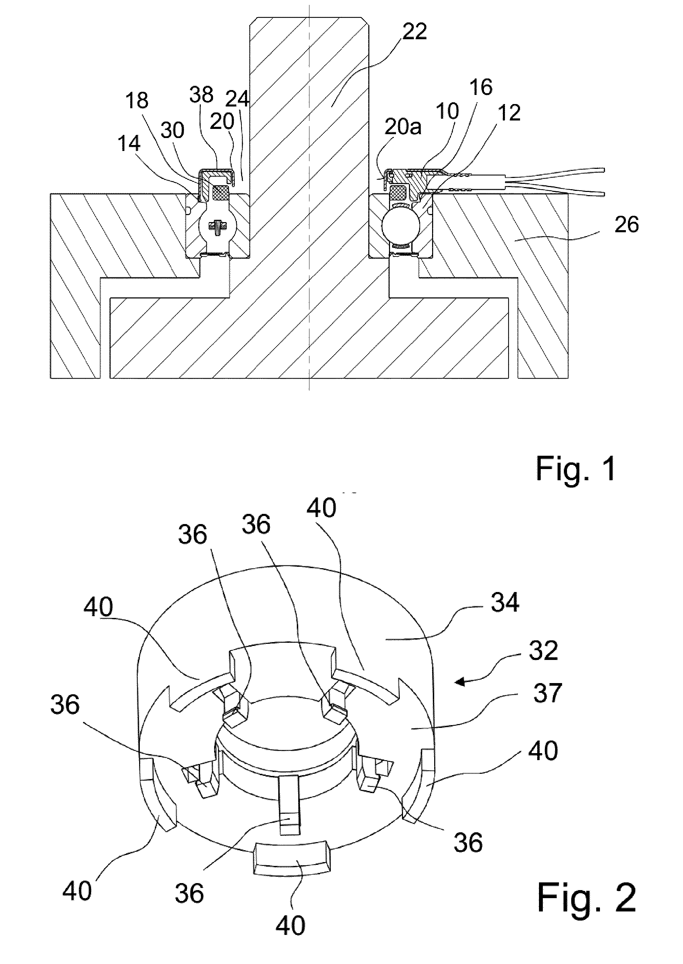

Fig. 1 illustrates a sensor body 10 clipped to a first ring 12 formed as an outer ring of a bearing. The sensor body 10 includes a plurality of clips 14 provided on a first radial edge 18a thereof. The clips 14 are axial protrusions of a cover member 38 of the sensor body 10. The cover member 38 is a stamped sheet-metal piece. The clips 14 engage with a circular groove 16 or recess with undercut in the outer ring 12 of the bearing. A second radial edge 20 of the sensor body 10 opposite to the first radial edge 18 includes a cylindrical inner surface 20a. When the bearing equipped with the sensor body 10 is mounted on a shaft 22 of an electric motor or generator as shown in Fig. 1, the cylindrical inner surface 209 on the second radial edge 20 forms a circular gap is formed between the second radial edge 20 and the shaft 22.

The outer ring 12 of the bearing is fitted into a motor housing 26 and fixed therein by suitable means. An inner ring 28 of the bearing is fitted over the shaft 22.

A magnetic encoder ring 30 is attached to the inner ring 28 of the bearing and the sensor body 10 includes Hall cells or other magnetic sensors (not shown) detecting an oscillating magnetic field generated by the passing magnetic poles of the encoder ring 30 when the shaft 22 is rotating.

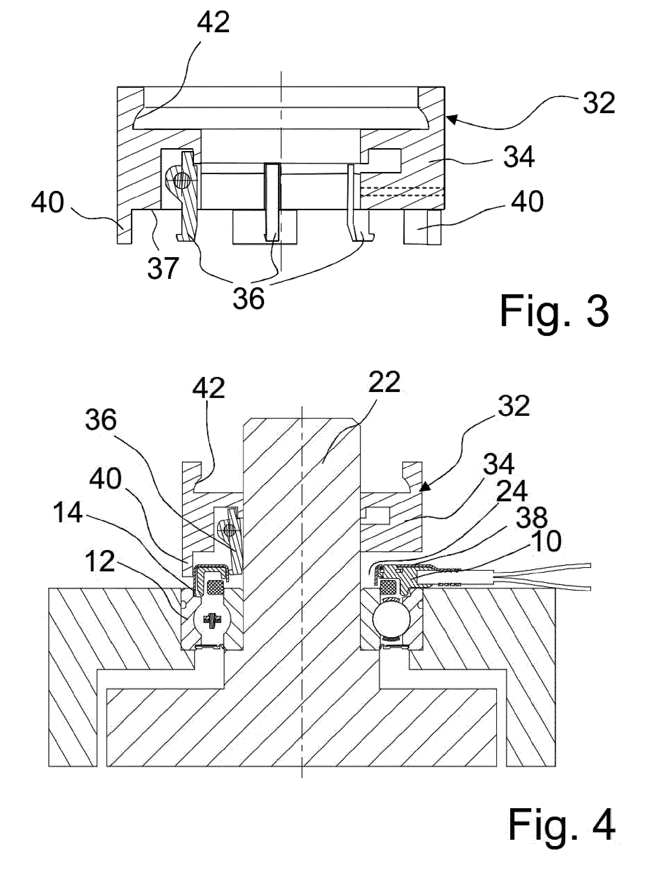

Fig. 2 is a perspective view of a tool 32 according to the invention and Fig. 3 is a sectional view thereof.

The tool 32 includes a main body 34 and plurality of hooks 36 protruding from a radially inner edge of a lower axial surface 37 of the main body 34. The hooks 36 are configured to be inserted into the gap 24 between the shaft 22 and the sensor body 10 and are long enough to reach under the second radial edge 20 of the sensor body 10, more specifically under the axially lower edge of the cylindrical inner surface 20a of the cover member 38 of the sensor unit 10.

Optionally, the tool 32 may include means for manually releasing the hooks 36 from the sensor body 10, for example rods guided in radial bores as shown in dashed lines in Fig. 3.

Fig. 4 illustrates a configuration where the tool 32 is inserted halfway into the gap 24 between the shaft 22 and the sensor body 10. The upper edge of the cylindrical inner surface 20a of the sensor body 10 is rounded such that the hooks 36 are deflected radially inward in a radial direction away from the second radial edge 20 while being inserted. In alternative embodiments, the hooks 36 might be provided with inclined axial end surfaces configured to radially deflect the hooks 36 when the axial end surfaces come in contact with the sensor body 10 upon inserting the tool into the gap 24.

A radially inner surface of the tool body 34 fits precisely over the shaft 22 and therefore serves as a centering portion that is configured to center the tool body 34 relative to the shaft.

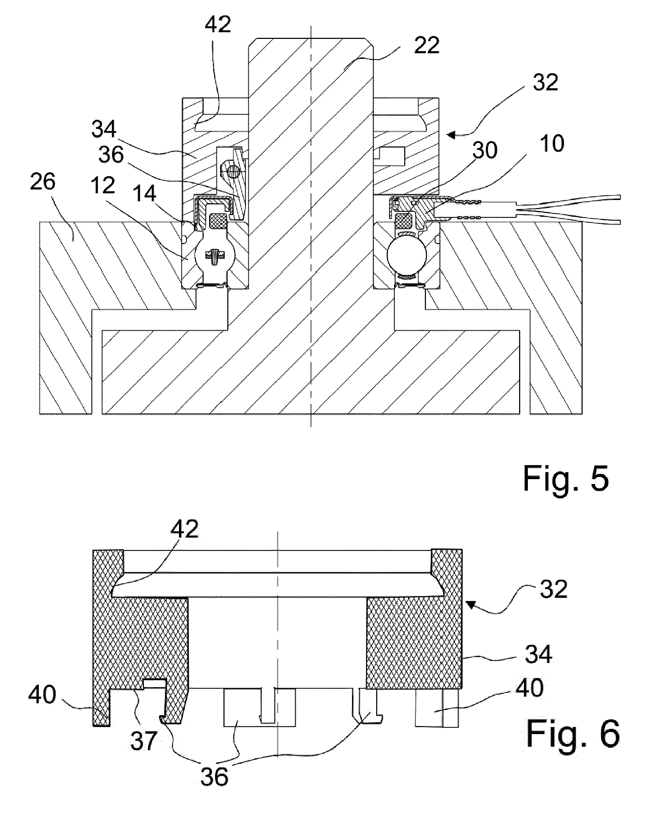

Fig. 5 illustrates a configuration where the tool 32 is fully inserted into the gap 24 between the shaft 22 and the sensor body 10 such that the hooks 36 snap under said second radial edge 20. At the same time, a stop portion of the tool body 34 formed as a set of protruding supports 40 comes into axial stop against the first ring 12.

The tool body 34 includes an attachment portion 42 on an axial side opposite to the stop portion 40, i.e. on the upper surface in Fig. 4 and 5, wherein the attachment portion 42 has an undercut configured to be attached to a bearing extractor (not illustrated). The dimensions of the undercut recess correspond to those of standard bearings such that a standard bearing extractor can be used.

Thanks to the attachment portion 42, the tool according to the invention can be combined with any existing bearing extractor. This tooling removes the sensor body 10 without damaging the bearing and the impulse ring 30. The extraction effort is below 100N such that it can be applied trough the bearing ball set.

In the embodiment of Figs. 4 and 5, the hooks 36 are pivotably mounted on the tool body 34 and loaded with a spring in a radial direction toward the second radial edge 20.

Fig. 6 is a second embodiment of the toll 32 according to the invention where the hooks 36 are made of flexible material and formed as one piece with the tool body 34.

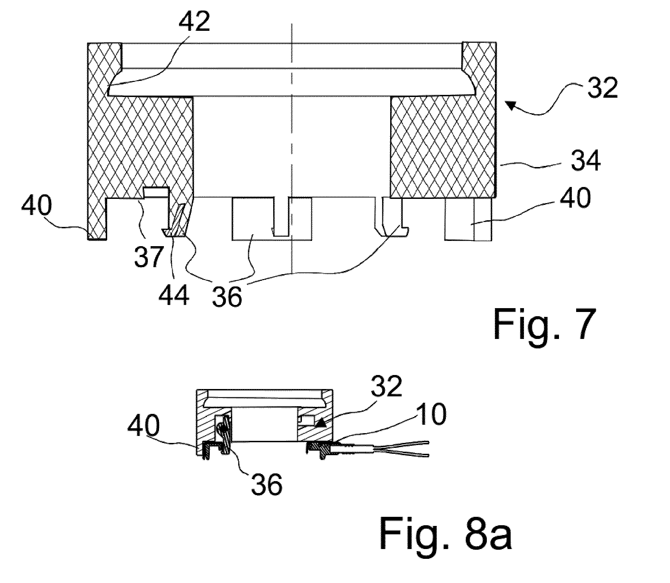

Fig. 7 illustrates a third embodiment of the invention wherein end portions of the hooks 36 configured to reach under the second radial edge 18 are provided with reinforcing metal inserts 44.

When the failed sensor body 10 is removed, the new one can be clipped. The force requires for clipping is between 500 and 1000N. Consequently this force cannot through the ball set. The force has to come from the motor flange, or can be applied manually.

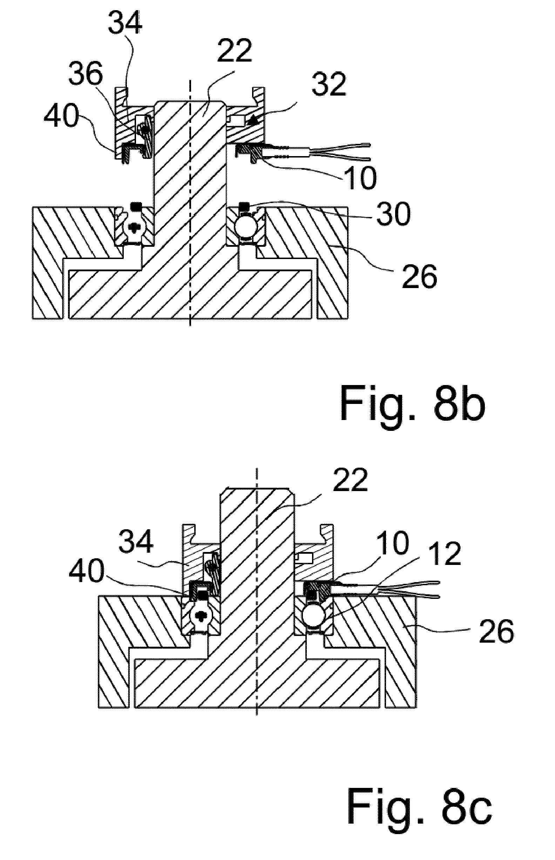

A method for clipping a new sensor body using a tool according to the invention is illustrated in Figs 8a - 8b. The sensor body 10 is centered on its inner diameter in the tool 32 (cf. Fig. 8a). Then the tool 32 is centered on the rotor shaft 22 (Fig. 8b). The tool 32 is provided with five sector-shaped supports as stop portions 40, providing the accurate axial placement of the sensor body 10 (Fig. 8c). The tool 32 is then released by a suitable mechanism deflecting the hooks 36 radially inward.

The sequence of Figs. 4 and 5 illustrates a method for extracting a sensor body 10 clipped to the outer ring 12 of a bearing as described above.

The method includes using a tool 32 as described above, wherein the hooks 36 are inserted into said gap 24 until the hooks engage with the second radial edge 20, and extracting the sensor body 10 by pulling the tool 32 in a direction opposite to the insertion direction.

## Claims

1. Tool (32) for extracting a sensor body (10) clipped to a first ring (12) of a bearing, wherein the sensor body (10) includes engaging portions (36) provided on a first radial edge (18) thereof, and a second radial edge (20) opposite to the first radial edge(18), the sensor body (10) being configured to be mounted such hat a circular gap (24) is formed between the second radial edge (20) and a component configured to be in relation with the first ring (12),
wherein the tool (32) includes a plurality of hooks (36) configured to be inserted into said gap (24) and to reach under said second radial edge (20).

2. Tool (32) according to claim 1, **characterized in that** the hooks (36) are configured to be deflected in a radial direction away from the second radial edge (20) while being inserted and to snap under said second radial edge (20) upon reaching a predetermined axial position.

3. Tool (32) according to claim 2, **characterized in that** predetermined axial position is set such that it is reached before or at the axial position where a stop portion of a tool body (34) of the tool (32) comes into axial stop against the first ring (12).

4. Tool (32) according to claim 2 or 3, **characterized in that** the hooks (36) are provided with inclined axial end surfaces configured to radially deflect the hooks (36) when the axial end surfaces come in contact with the sensor body (10) upon inserting the tool into the gap (24).

5. Tool (32) according to one of claims 2 to 4, **characterized in that** the hooks (36) are made of flexible material.

6. Tool (32) according to claim 5, **characterized in that** end portions of the hooks (36) configured to reach under the edge are provided with reinforcing metal inserts.

7. Tool (32) according to one of claims 2 to 4, **characterized in that** the hooks (36) are pivotably mounted on the tool body (34) and loaded with a spring radial direction toward the second radial edge (20).

8. Tool (32) according to one of the preceding claims, **characterized by** further comprising:
a. a tool body (34) comprising a stop portion configured to come into axial stop against the first ring (12) of the bearing; and
b. a centering portion that is configured to center the tool body (34) relative to the component configured to rotate in relation to the first ring (12).

9. Tool (32) according to one of the preceding claims, **characterized by** further comprising means for manually releasing said hooks (36) from the second radial edge (20).

10. Tool (32) according to one of the preceding claims, **characterized in that** the component configured to rotate in relation to the first ring (12) is a shaft (22) and that the first ring (12) is an outer ring of the bearing.

11. Tool (32) according to claim 9, **characterized in that** an inner ring (28) of the bearing is mounted in said shaft (22).

12. Tool (32) according to one of the preceding claims, **characterized by** further comprising an attachment portion (42) on an axial side opposite to the stop portion, wherein the attachment portion (42) is configured to be attached to a bearing extractor.

13. Method for extracting a sensor body (10) clipped to a first ring (12) of a bearing, wherein the sensor body (10) includes a plurality of clips (14) provided on a first radial edge (18) thereof, and a second radial edge (20) opposite to the first radial edge (18), the sensor body (10) being configured to be mounted such hat a circular gap (24) is formed between the second radial edge (20) and a component configured to rotate in relation to the first ring (12), wherein the method includes using a tool (32) according to one of the preceding claims, wherein the hooks (36) are inserted into said gap (24) until the hooks (36) engage with the second radial edge (20), and extracting said sensor body (10) by pulling the tool (34) in a direction opposite to the insertion direction.
